# EUROPEAN PATENT SPECIFICATION

(11) **EP 2 060 211 B1**
(45) Date of publication and mention of the grant of the patent: **08.09.2010**
(21) Application number: 07425729.6
(22) Date of filing: 19.11.2007
(51) Int. Cl.: A47J 31/41, A47J 31/44

(54) **Apparatus for preparing and dispensing a beverage, in particular a chocolate-based beverage in a coffee machine**
Vorrichtung zur Herstellung und Ausgabe eines Getränks, insbesondere eines Getränks auf Schokoladenbasis, in einer Kaffeemaschine
Appareil pour la préparation et la distribution d'une boisson, en particulier une boisson chocolatée dans une machine à café

(43) Date of publication of application: 20.05.2009
(60) Divisional application: 10170585.3
(73) Proprietor: Gruppo Cimbali S.p.A., 20082 Binasco (MI) (IT)
(72) Inventor: Sala, Dario c/o Gruppo Cimbali S.p.A., 20082 Binasco (MI) (IT); Coccia, Andrea c/o Gruppo Cimbali S.p.A., 20082 Binasco (MI) (IT)
(74) Representative: Perani, Aurelio

(56) References cited:
- EP-A- 1 374 748
- WO-A-2006/135864
- US-A1- 2006 034 987

## Description

The present invention relates to an apparatus for preparing and dispensing a beverage obtained from a concentrated fluid product having the taste of the beverage to be prepared, in a machine for preparing various types of coffee and milk based beverages, said machine comprising at least one steam generator for producing steam, an apparatus for producing the coffee with associated dispenser, as well as a milk source.

Coffee machines suitable for preparing and dispensing various types of beverages are know in the specific technological sector.

In machines of the conventional type, the beverages are prepared with a certain amount of manual dexterity by the operator who, for example, heats and froths milk in a jug and then pours it into the cup and mixes it with the coffee in order to form cappuccino.

Modem technology and the massive use of electronics are also giving rise in this type of machine to an increasingly greater automation of the operations such that they may also be performed by operators who are less expert in the techniques for preparing the various beverages.

WO patent application No. 2006/135864 discloses an apparatus and a method for automatically dispensing a flavouring such a syrup into a beverage. The apparatus comprises a pump having a milk inlet and an outlet; a steam supply fluidly connected to the pump outlet; a refrigerated milk supply fluidly connected to the milk inlet; a mixing chamber having a first inlet fluidly connected to the pump outlet, a second inlet, and a dispensing outlet; a plurality of flavouring reservoirs, each flavouring reservoir fluidly connected to the mixing chamber second inlet; and a valve for controlling the steam flow from the steam supply to the flavouring passageway.

Apart from coffee, cappuccino and tea, a beverage which is becoming increasingly popular among consumers is hot chocolate which traditionally is prepared by mixing the chocolate-based product with milk and then heating the whole preparation using the conventional steam spout of a coffee machine.

Instead of conventional soluble products in powder form, chocolate-based fluid preparations in concentrated form, which must be diluted with water or milk, are becoming increasingly widespread.

These latter preparations, in fact, have the advantage that they may pass from a sterile container which contains them to the sealed distribution pipes inside the apparatus without any particular risk of contamination which could adversely affect the hygienic conditions of the beverage.

Since, in coffee machines, the use of concentrated fluid milk as a primary source for the various uses in these machines is also becoming increasingly widespread, the problem arises as to how to use this milk source during preparation of the chocolate when the latter is in turn obtained from a concentrated fluid product.

The direct mixing of a quantity of concentrated fluid milk with a corresponding quantity of concentrated chocolate-based product and subsequent mixing with water for final dilution at the optimum density required for the beverage is not easy to achieve and produces results which are not satisfactory from a qualitative point of view.

The object of the present invention is to propose an apparatus for preparing chocolate in a coffee and cappuccino machine, obtained from a chocolate-based concentrated fluid product, using for this function the same devices used for preparation of milk-based beverages, resulting in a significant structural simplification and standardization of the components used.

Another object of the present invention is to provide the possibility of obtaining from a coffee machine, particularly but not exclusively of the type mentioned above, also both hot and cold chocolate-based beverages in order to satisfy the requirements of users as regards variation of the beverages.

This object is achieved by the apparatus according to Claim 1 which fallows.

The characteristic features and advantages of the present invention will emerge more clearly from the following detailed description of a preferred practical embodiment thereof, illustrated by way of a non-limiting example in the accompanying drawings in which:
- Figure 1 shows in schematic form the circuit layout of the apparatus;

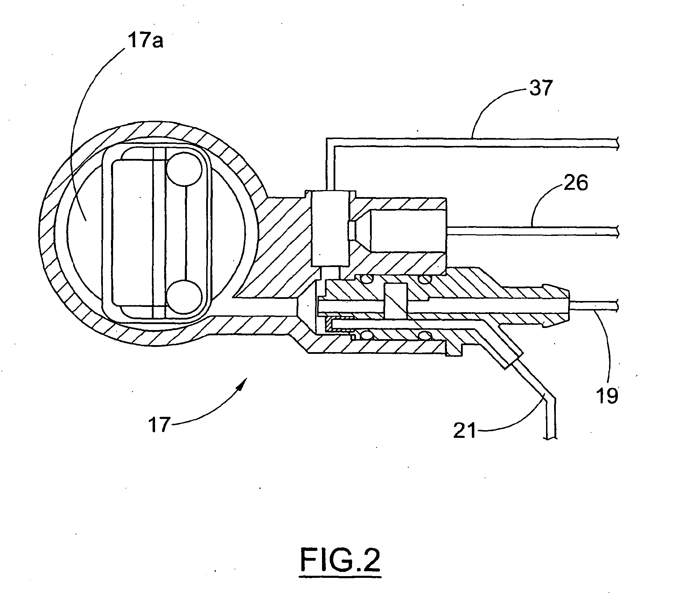

- Figure 2 shows, cross-sectioned and on a larger scale, the device for preparing the beverage with frother and associated lines for supplying the liquid milk, steam, air and chocolate-based product with preliminary dilution thereof.

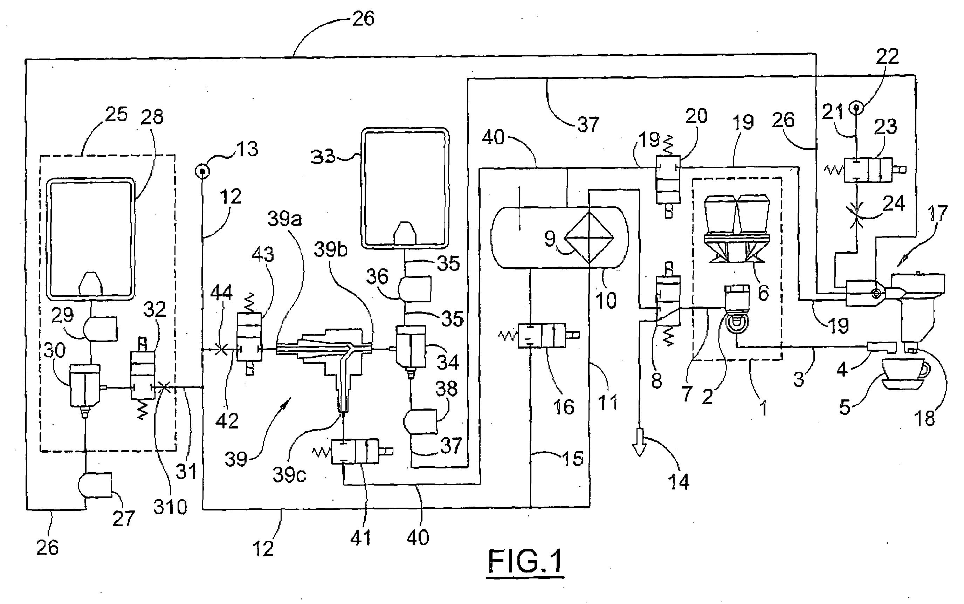

With reference to the abovementioned Figure 1, 1 denotes in its entirety an apparatus for producing coffee, in particular, espresso coffee, without this necessarily excluding a different type of coffee beverage. 2 denotes the coffee extraction device which is connected, by means of a line 3, to a conventional dispenser 4 underneath which a receiving cup, schematically denoted by 5, is situated.

The characteristics of the coffee extraction device 2 depend on the preparation methods: said device may be in the form of a simple mixer in the case of coffee which is soluble or in the form of a concentrated syrup.

Alternatively, it may consist of a conventional device equipped with filter or functioning using pods or capsules.

6 denotes schematically a conventional container for dispensing soluble coffee or concentrated coffee syrup or also represents the device for grinding coffee beans in the case of traditional espresso coffee.

The extraction device 2 is connected by means of the line 7 to an intercept valve 8 which connects it to the hot water source which, in the example shown in Figure 1, consists of a heat exchanger 9 which is situated inside a steam generator 10 and, in the machine, is also intended to produce steam. The heat exchanger 9 is connected, by means of the line 11 and the line 12, to a water source 13 for necessary replenishing with water.

In the position where it intercepts the line 7 the valve 8 connects the extraction device to an outlet, denoted by 14, for removal of any residual matter.

The steam generator 10 is also replenished with water from the source 13 via the line 15 and the intercept valve 16.

The coffee producing apparatus 1 has, associated with it, a beverage preparation device - denoted by 17 - which includes a frothing chamber 17a with associated dispensing spout 18 situated above the cup 5. The beverage preparation device 17 is connected, by means of the line 19 and the intercept valve 20, to the steam generator 10. By means of another line, denoted by 21, the device 17 is connected to an air source, denoted by 22.

An intercept valve 23 and an adjustable flow restrictor 24, if required, are arranged along the line 21.

Finally, the same beverage preparation device 17 is connected to a source 25 of liquid milk by means of a line 26 along which a pump 27 operated by a conventional electric motor, not shown, is arranged. The pump 27 may advantageously be of the peristaltic type or gear type and the electric motor may be of the variable-speed type.

The source 25 of liquid milk consists of a tank 28 containing concentrated milk in the fluid state which is conveyed, by means of a metering pump 29, to a connector unit 30 which may also be designed to contain internally a non-return valve (not shown in the drawings) suitable for preventing bacterial contamination of the product contained in the tank 28.

The water source 13 is connected to the connector unit 30 via a line 31 provided with a flow restrictor 31a and intercepted by the valve 32.

Mixing of a predetermined quantity of concentrated milk and water from the source 13 is performed inside the connector unit 30, resulting in the formation of cold diluted milk.

The latter, by means of the pump 27 and the line 26, is propelled as far as to the beverage preparation device 17 where heating, when required, is performed by means of transfer of the condensation heat of the steam from the steam generator 10 via the line 19 and the intercept valve 20.

Any frothing of the milk, when required, is performed in the frothing chamber 17a by means of the introduction of air via the line 21 and the adjustable flow restrictor 24. The air may also be under pressure.

If a quantity of cold milk is desired or requested by the user, the steam valve 20 is kept closed.

In these conditions the cold milk may be dispensed in its liquid state or may also be frothed, by supplying air to the device 17 by means of the line 21. In accordance with the invention, the coffee machine comprises a tank 33 containing a chocolate-based fluid preparation in concentrated form.

The tank 33 is connected to a connector unit 34 by means of a first line 35 along which a pump 36 is arranged. The same connector unit 34 is connected, by means of a second line 37 comprising where necessary also a supply pump 38, to the beverage preparation device 17.

A quantity of concentrated chocolate product is drawn in by the tank 33 via the pump 36 which propels it into the connector unit 34. The latter may also be provided with a conventional non-return valve for preventing contamination inside the tank 33.

In accordance with the invention, the quantity of product, for example chocolate-based product, supplied into the connector unit 34 undergoes a first stage of dilution with water heated to a predetermined temperature inside a steam heater device denoted overall by 39.

The steam heater 39, which may be of the conventional type, comprises an inlet 39a for the water to be heated, an outlet 39b for the heated water and an inlet 39c for the heating steam.

The inlet 39c is connected to the steam line 40, leading from the steam generator 10, by means of an associated intercept valve 41.

The inlet 39a of the heater is connected, by means of the line 42, to the water source 13 via an intercept valve 43 and a calibrated flow restrictor 44.

The outlet 39b of the heater 39, by means of a line section 42a, is directly connected to the connector unit 34 inside which preliminary dilution of the quantity of chocolate product with a predetermined quantity of hot water is performed.

This is performed after simultaneous opening of the valve 43, which supplies the water, and the valve 41, which supplies the quantity of heating steam. ,

The quantity of product, for example chocolate product in concentrated form, is then diluted in the connector unit 34 depending on the delivery of the metering pump 36 and the flowrate determined by the calibrated passage of the flow restrictor 44 and conveyed to the beverage preparation device 17 via the line 37, with the aid, if necessary, of the additional supply pump 38.

The quantity of chocolate product, pre-diluted in the connector unit 34 with tepid water, completes its dilution and any heating until the conditions considered optimum for the beverage are obtained, in the beverage preparation device 17 which comprises a frothing chamber 17a.

Final dilution is achieved by means of introduction into the device 17 of a predetermined quantity of milk via the line 26 and a command imparted to the supply pump 27.

Heating is achieved by means of introduction, into the device 17, of a predetermined quantity of steam via the line 19 and a command imparted to the intercept valve 20.

In accordance with the apparatus of the present invention, it is also possible to obtain a chocolate drink also in the frothed condition by imparting a special command to the valve 23 which causes the introduction of a calibrated quantity of air into the device 17 and the consequent frothing of the beverage inside the chamber 17a.

Finally, as can be seen in Figure 1, the dispenser 18 for the various beverages which may be prepared in the device 17, including the chocolate-based beverage, is arranged preferably close to the coffee dispenser 4 so that, with a single position of the cup 5, it is possible to receive in the cup the various types of beverages which the machine is able to dispense.

From the above description it can be understood that, depending on the opening state of the intercept valves 8, 20, 23 and 43 as well as operation of the pump 27 and the pumps 36 and/or 38, it is possible to dispense various types of beverages, in both the hot and cold state, including, therefore, in addition to the usual coffee, cappuccino and milk, other beverages such as, for example, chocolate, all in the same machine and using procedures which can be performed automatically with the maximum flexibility as regards the type of beverage to be dispensed and at the same time ensuring a high degree of operational reliability.

Although in the above description particular reference has been made to the preparation of a beverage obtained from a chocolate-based fluid product in concentrated form, it is clear that, by way of alternative, the beverage may be obtained from any type of fluid product in concentrated form, having a taste different from chocolate, without thereby departing from the scope of the present invention as described above and claimed below.

## Claims

1. A machine for preparing various types of coffee and milk based beverages, said machine comprising at least one steam generator (10) for producing steam, an apparatus (1) for producing coffee with associated dispenser (4) as well as a source (25) of liquid milk, further comprising an apparatus for preparing and dispensing a beverage from a concentrated fluid product having the taste of the beverage to be prepared, wherein said apparatus includes a tank (33) containing the concentrated fluid product to be used for preparation of the beverage, a connector unit (34) connected to said tank (33) by means of a first line (35), a pump (36) arranged along said first line (35) so as to convey a predetermined quantity of concentrated fluid product from said tank (33) to said connector unit (34), a water heater device (39) provided with an inlet (39a) and an outlet (39b) for the water and an inlet (39c) for introducing the steam, a water supply line (42) connecting the inlet (39a) of the said heater (39) to a water source (13), an intercept valve (43) arranged along said water supply line (42), a line (42a) for connecting together the outlet (39b) for the heated water from said heater (39) and said connector unit (34) so as to introduce into the latter a predetermined quantity of water, a steam line (40) connecting said generator (10) to said inlet (39c) for the steam of the heater (39), an intercept valve (41) arranged along said steam line (40), a beverage preparation device (17) with associated dispenser (18) connected, via a second line (37), to said connector unit (34) and, via a third line (26), to said source (25) of liquid milk.

2. Apparatus according to Claim 1, **characterized in that** said water supply line (42) connecting the water source (13) to the inlet (39a) of the said heater (39) comprises a calibrated flow restrictor (44).

3. Apparatus according to Claims 1 and 2, **characterized in that** said beverage preparation device (17) includes a frothing chamber (17a) for frothing the product when required, a line (19) for connection to said steam generator (10) as well as a line (21) for connecting to an air source (22) respective intercept valves (20, 23) arranged along the said steam and air lines, said supply pumps (27, 36, 38) and the said intercept valves (20, 23) being able to be operated independently of each other.

4. Apparatus according to Claims 1 to 3, **characterized in that** said dispenser (18) of the beverage preparation device (17) is positioned close to the coffee dispenser (4) so that, with a single position of the cup (5), it is possible to receive in the cup the various types of beverages which the machine is able to dispense.

5. Apparatus according to Claim 1, **characterized in that** said source (25) of liquid milk comprises a tank (28) containing concentrated milk, a dilution connector unit (30), a pump (29) for supplying a predetermined quantity of concentrated milk to said dilution connector unit (30), a line (31) between said dilution connector unit (30) and a source (13) of cold water, a valve (32) arranged along said line (31) for supplying a predetermined quantity of cold water to the said dilution connector unit (30) depending on the quantity of concentrated milk present in the dilution connector unit (30).

6. Apparatus according to any one of Claims 1 to 5, **characterized in that** the said concentrated fluid product for preparation of the beverage is a chocolate-based product.

## Patentansprüche

1. Maschine zum Zubereiten von verschiedenen Arten von kaffee- und milchbasierten Getränken, wobei die Maschine wenigstens einen Dampferzeuger (10) zum Erzeugen von Dampf, eine Vorrichtung (1) zum Zubereiten von Kaffee mit einem zugeordneten Spender (4) sowie eine Quelle (25) für flüssige Milch umfaßt, ferner umfassend eine Vorrichtung zum Zubereiten und Abgeben eines Getränks aus einem konzentrierten flüssigen Produkt, das den Geschmack des zuzubereitenden Getränkes besitzt, wobei diese Vorrichtung einen Vorratsbehälter (33) umfaßt, der das konzentrierte flüssige Produkt enthält, das für die Zubereitung des Getränkes verwendet werden soll, eine Verbindungseinheit (34), die mit dem Vorratsbehälter (33) mittels einer ersten Leitung (35) verbunden ist, eine Pumpe (36), die entlang der ersten Leitung (35) angeordnet ist, um eine vorbestimmte Menge des konzentrierten flüssigen Produktes aus dem Tank (33) zu der Verbindungseinheit (34) zu fördern, eine Wassererwärmungsvorrichtung (39), die mit einem Einlaß (39a) und einem Auslaß (39b) für Wasser und einem Einlaß (39c) zum Einleiten von Dampf versehen ist, eine Wasserzuführleitung (42), die den Einlaß (39a) der Erwärmungsvorrichtung (39) mit einer Wasserquelle (13) verbindet, ein Unterbrecherventil (43), das entlang der Wasserzuführleitung (42) angeordnet ist, eine Leitung (42a) zum Verbinden des Auslasses (39b) für erhitztes Wasser aus der Erwärmungsvorrichtung (39) mit der Verbindungseinheit (34), um in die letztere eine vorbestimmte Menge von Wasser einzuleiten, eine Dampfleitung (40), die den Erzeuger (10) mit dem Einlaß (39c) für den Dampf der Erwärmungsvorrichtung (39) verbindet, ein Unterbrecherventil (41), das entlang der Dampfleitung (40) angeordnet ist, eine Getränkezubereitungsvorrichtung (17) mit einem zugeordneten Spender (18), die über eine zweite Leitung (37) mit der Verbindungseinheit (34) und über eine dritte Leitung (26) mit der Quelle (25) von flüssiger Milch verbunden ist.

2. Vorrichtung nach Anspruch 1, **dadurch gekennzeichnet, daß** die Wasserzuführleitung (42), die die Wasserquelle (13) mit dem Einlaß (39a) der Erwärmungsvorrichtung (39) verbindet, einen kalibrierten Flußbegrenzer (44) umfaßt.

3. Vorrichtung nach Anspruch 1 und 2, **dadurch gekennzeichnet, daß** die Getränkezubereitungsvorrichtung (17) eine Aufschäumkammer (17a) zum Aufschäumen des Produktes bei Bedarf, eine Leitung (19) zur Verbindung mit dem Dampferzeuger (10) und eine Leitung (21) zur Verbindung mit einer Luftquelle (22) umfaßt, wobei entsprechende Unterbrecherventile (20, 23) entlang der Dampf- und Luftleitungen angeordnet sind und wobei Zuführpumpen (27, 36, 38) und die Unterbrecherventile (20, 23) dazu ausgebildet sind, unabhängig voneinander betrieben zu werden.

4. Vorrichtung nach einem der Ansprüche 1 bis 3, **dadurch gekennzeichnet, daß** der Spender (18) der Getränkezubereitungsvorrichtung (17) nahe des Kaffeespenders (4) angeordnet ist, so daß es in einer einzigen Position einer Tasse (5) möglich ist, in der Tasse verschiedene Arten von Getränken, die die Maschine abgeben kann, zu empfangen.

5. Vorrichtung nach Anspruch 1, **dadurch gekennzeichnet, daß** die Quelle (25) von flüssiger Milch einen Vorratsbehälter (28), der konzentrierte Milch enthält, eine Verdünnerverbindungseinheit (30), eine Pumpe (29) zum Zuführen einer vorbestimmten Menge konzentrierter Milch zu der Verdünnerverbindungseinheit (30), eine Leitung (31) zwischen der Verdünnerverbindungseinheit (30) und einer Quelle (13) für kaltes Wasser und ein entlang der Leitung (31) angeordnetes Ventil (32) zum Zuführen einer vorbestimmten Menge von kaltem Wasser, die von der Menge der in der Verdünnerverbindungseinheit (30) vorhandenen konzentrierten Milch abhängt, zu der Verdünnerverbindungseinheit (30) umfaßt.

6. Vorrichtung nach einem der Ansprüche 1 bis 5, **dadurch gekennzeichnet, daß** das konzentrierte flüssige Produkt zur Zubereitung des Getränks ein schokoladenbasiertes Produkt ist.

## Revendications

1. Machine destinée à préparer des types divers de boissons à base de café et de lait, ladite machine comprenant au moins un générateur de vapeur (10) pour produire de la vapeur, un dispositif (1) de préparation de café avec un distributeur associé (4) ainsi qu'une source (25) de lait liquide, comprenant en outre un dispositif de préparation et de distribution d'une boisson réalisée à partir d'un produit liquide concentré ayant le goût de la boisson à préparer, ledit dispositif comprenant un réservoir (33) qui contient le produit liquide concentré destiné à être utilisé pour la préparation de la boisson, une unité de connexion (34) reliée audit réservoir (33) par le biais d'une première conduite (35), une pompe (36) disposée le long de la première conduite (35) de manière à transporter une quantité prédéterminée du produit liquide concentré depuis le réservoir (33) vers ladite unité de connexion (34), un dispositif chauffe-eau (39) qui est pourvu d'une entrée (39a) et d'une sortie (39b) pour l'eau ainsi que d'une entrée (39c) d'admission de vapeur, une conduite d'amenée d'eau (42) qui relie ladite entrée (39a) du dispositif de chauffage (39) à une source d'eau (13), une vanne d'interception (43) disposée le long de la conduite d'amenée d'eau (42), une conduite (42a) destinée à relier entre elles ladite sortie (39b) pour l'eau chauffé en provenance du dispositif de chauffage (39) et ladite unité de connexion (34) de manière à introduire dans cette dernière une quantité prédéterminée d'eau, une conduite à vapeur (40) connectant ledit générateur (10) à ladite entrée (39c) pour la vapeur du dispositif de chauffage (39), une vanne d'interception (41) qui est disposée le long de ladite conduite à vapeur (40), un dispositif de préparation de boissons (17) ayant un distributeur associé (18), qui est relié via une seconde conduite (37) à ladite unité de connexion (34) et via une troisième conduite (26) à ladite source (25) de lait liquide.

2. Dispositif selon la revendication 1, **caractérisé par le fait que** ladite conduite d'amenée d'eau (42) reliant ladite source d'eau (13) à ladite entrée (39a) du dispositif de chauffage (39) comprend un limiteur calibré de débit (44).

3. Dispositif selon la revendication 1 et 2, **caractérisé par le fait que** le dispositif de préparation de boissons (17) comprend une chambre de moussage (17a) pour mousser le produit en cas de besoin, une conduite (19) pour le connecter au générateur de vapeur (10) ainsi qu'une conduite (21) pour le connecter à une source d'air (22), des vannes respectives d'interception (20, 23) étant disposées le long des conduites à vapeur et à air, et des pompes d'admission (27, 36, 38) et les vannes d'interception (20, 23) étant aptes à être actionnées indépendamment les unes des autres.

4. Dispositif selon l'une quelconque des revendications 1 à 3, **caractérisé par le fait que** le distributeur (18) du dispositif de préparation de boissons (17) est positionné à proximité du distributeur de café (4) de sorte que, avec une seule position d'une tasse (5), il est possible de recueillir dans la tasse des types divers de boissons que la machine est apte à distribuer.

5. Dispositif selon la revendication 1, **caractérisé par le fait que** ladite source (25) de lait liquide comprend un réservoir (28) contenant du lait concentré, une unité connecteur de dilution (30), une pompe (29) pour amener une quantité prédéterminée de lait concentré à ladite unité connecteur de dilution (30), une conduite (31) entre ladite unité connecteur de dilution (30) et une source (13) d'eau froide, une vanne (32) disposée le long de ladite conduite (31), pour amener à l'unité connecteur de dilution (30) une quantité prédéterminée d'eau froide en fonction de la quantité du lait concentré présent dans ladite unité connecteur de dilution (30).

6. Dispositif selon l'une quelconque des revendications 1 à 5, **caractérisé par le fait que** le produit liquide concentré pour la préparation de la boisson est un produit à base de chocolat.
